# EUROPÄISCHE PATENTSCHRIFT

(11) **EP 1 206 012 B1**
(45) Veröffentlichungstag und Bekanntmachung des Hinweises auf die Patenterteilung: **08.10.2008**
(21) Anmeldenummer: 01124304.5
(22) Anmeldetag: 19.10.2001
(51) Int. Cl.: H01R 13/66, H01R 13/533

(54) **Anordnung, umfassend einen pH-Sensor und einen Steckverbinder**
Device comprising a pH-sensor and a connector
Ensemble comprenant une sonde de pH et sa connexion

(30) Priorität: 07.11.2000 DE 10055090
(43) Veröffentlichungstag der Anmeldung: 15.05.2002
(60) Teilanmeldung: 08012255.9
(73) Patentinhaber: Endress + Hauser Conducta Gesellschaft für Mess- und Regeltechnik mbH + Co.KG., 70839 Gerlingen (DE)
(72) Erfinder: Pechstein, Torsten, Dr.-Ing., 01455 Radebeul (DE); Franzheld, Reiner, Dr., 04736 Waldheim (DE); Scholz, Katrin, Dr., 09600 Naundorf (DE)
(74) Vertreter: Hahn, Christian

(56) Entgegenhaltungen:
- EP-A1- 0 676 710
- DE-A1- 4 208 140
- DE-C1- 19 719 730

## Beschreibung

Die vorliegende Erfindung betrifft und Anordnung, umfassend einen pH-Sensor und einem Steckverbinder, wobei mittels des Steckverbinders eine übertragungsleitung an den PH-Sensor anschließbar ist.

Steckverbinder werden die Messsignale und/oder die Energieversorgungssignale mittels einer elektrisch leitfähigen Verbindung zwischen dem Buchsenelement und dem Steckerelement über den Steckverbinder übertragen. Um eine elektrisch leitfähige Verbindung zwischen dem Buchsenelement und dem Steckerelement des Steckverbinders herstellen zu können, müssen an dem Buchsenelement und an dem Steckerelement elektrische Kontaktelemente aus einem elektrisch leitfähigen Material vorhanden sein, die bei miteinander verbundenem Buchsenelement und Steckerelement miteinander in Kontakt treten.

Insbesondere beim Einsatz eines Steckverbinders in einer feuchten oder chemisch aggressiven Umgebung, müssen hohe Anforderungen an den Steckverbinder hinsichtlich Dichtigkeit und elektrischer Isolationseigenschaften gestellt werden. Das Eindringen von Feuchtigkeit, Staub oder Schmutzpartikel und aggressiver Substanzen bspw. könnte zu einem Kurzschluss zwischen den elektrischen Kontaktelementen des Steckverbinders oder zu einer Korrosion der Kontaktelemente führen. Eine zuverlässige Messung durch Auswerten des Messsignals und/oder eine zuverlässige Versorgung des pH-Sensors mit elektrischer Energie wird dadurch beeinträchtigt bzw. sogar unmöglich.

Die Patentschrift DE 197 19 730 C1 offenbart eine Steckverbindung für einen explosionsgefährdeten Bereich zur Energie- und Datenübertragung mittels elektrischer Größen bei einem Bussystem mit einem Übertrager mit einem Primärteil und einem Sekundärteil. Die aus Gründen des Explosionsschutz erforderlichen Begrenzungseinrichtungen sind im Primärteil angeordnet und sind zur Begrenzung der an das Sekundärteil zu übertragenden elektrischen Größen auf für die jeweilige Zündschutzart zulässige Weise ausgelegt.

Die Patentschrift DE 196 10 167 C1 offenbart ein in ein Medium eintauchbares Messgerät zur Ermittlung von Zustandsgrößen eines flüssigen Mediums. Das Gerät enthält in einem zylindrischen Gehäuse integrierte Sensoren und einen Datenlogger. Gehäuseteile sind flüssigkeitsdicht aneinander montierbar. Die im Gehäuse angeordnete Schnittstelle zur Übertragung des analogen Messignals von einem integrierten Sensor zum Datenlogger kann induktiv gestaltet sein.

Das Deutsche Gebrauchsmuster DE 8814 743.6 offenbart eine pH-Elektrode mit mit zugeordneter Referenzelektrode mit einer Steckverbindung zu einer Übertragungsleitung und einem an dieser angeschlossenen Auswertegerät , wobei innerhalb des Gehäuses des elektrodenseitigen Steckkopfteils ein das hochohmige Elektrodenausgangssignal auf niederohmige Werte herabsetzender Impedanzwandler angeordnet ist. Die Energieversorgung erfolgt entweder über ebenfalls im Gehäuse eingebaute Batterien oder durch Zuleitung über eine galvanische Steckverbindung.

Die Messelektrode ist weiter dadurch gekennzeichnet, dass der Ausgang des Impedanzwandlers mit einem nachgeschalteten, galvanischen Trennglied, insbesondere einem Optokoppler oder Übertrager verbunden ist zur direkten Gewinnung einer niederohmigen, temperaturkompensierten und galvanisch getrennten Elektrodenausgangsspannung am Ausgang der Steckverbindung.

Es ist deshalb die Aufgabe der vorliegenden Erfindung, eine Übertragungsleitung mittels eines Steckverbinders derart an mindestens einen pH-Sensor anzuschließen, dass Feuchtigkeit, Staub oder Schmutzpartikel und aggressive Substanzen, die Signalübertragungseigenschaften über den Steckverbinder nicht beeinträchtigen können.

Die Aufgabe wird durch die Merkmale des Anspruchs 1 gelöst.

Die erfindungsgemäße Anordnung kann zum Anschluss einer Übertragungsleitung an einen pH-Sensor eingesetzt werden. Über den Steckverbinder können ein Energieversorgungssignal an einen pH-Sensor aber auch ein Messsignal von dem pH-Sensor übertragen werden.

Das Steckerelement kann dem mindestens einen pH-Sensor und das Buchsenelement der Übertragungsleitung zugeordnet sein. Alternativ kann der pH-Sensor jedoch auch mit dem Buchsenelement versehen sein, wobei die Übertragungsleitung dann dem Steckerelement zugeordnet ist.

Zum Anschluss der Übertragungsleitung an den mindestens einen pH-Sensor wird das Steckereelement in bekannter Weise in das Buchsenelement gesteckt. Bei zusammengestecktem Buchsenelement und Steckerelement kommt es jedoch nicht - wie beim Stand der Technik - zu einer elektrisch leitfähigen Verbindung zwischen Kontaktelementen des Buchsenelementes und Kontaktelementen des Steckerelementes. Vielmehr werden durch das Ineinanderstecken des Buchsenelements und des Steckerelements die Mittel zur Realisierung der kontaktlosen Signalübertragung in dem Buchsenelement und in dem Steckerelement in eine definierte Position relativ zueinander gebracht, so dass eine zuverlässige kontaktlose Signalübertragung über den Steckverbinder erfolgen kann.

Da keine elektrischen Kontaktelemente aus dem Buchsenelement und dem Steckerelement herausgeführt werden müssen, können das Buchsenelement und das Steckerelement nach außen hin vollständig abgedichtet werden. Selbst wenn die Abdichtung zwischen dem Buchsenelement und dem Steckerelement das Eindringen von Feuchtigkeit, Staub oder Schmutzpartikel und aggressiver Substanzen nicht vollständig verhindern kann, können die eindringenden Substanzen nicht in das Buchsenelement selbst oder das Steckerelement selbst eindringen. Bei ineinandergestecktem Buchsenelement und Steckerelement kann sich zwischen dem Buchsenelement und dem Steckerelement ein Spalt bilden. In diesen Spalt eingedrungene Feuchtigkeit, Staub oder Schmutzpartikel und aggressive Substanzen haben nahezu keine Auswirkung auf das Signalübertragungsverhalten zwischen Buchsenelement und Steckerelement und beeinträchtigen die kontaktlose Signalübertragung nicht.

Mit der erfindungsgemäßen Anordnung kann also ein Anschluss einer Übertragungsleitung an einen pH-Sensor realisiert werden, bei dem Feuchtigkeit, Staub oder Schmutzpartikel und aggressive Substanzen das Übertragungsverhalten nicht beeinträchtigen. Durch die erfindungsgemäße Anordnung können des Weiteren Leckströme zwischen dem mindestens einen Sensor und einem am Ende der Übertragungsleitung angeschlossenen Messumformer durch eine galvanische Trennung vermieden werden. Auf den Einsatz einer Potentialausgleichsleitung oder ähnlicher Mittel kann verzichtet werden. Außerdem ist der erfindungsgemäße Steckverbinder besonders explosionsgeschützt. Ein weiterer Vorteil des erfindungsgemäßen Steckverbinders ist die Möglichkeit einer homogenen, d.h. vollständig umschlossenen, Gestaltung des Stecker- und Buchsengehäuses. Dadurch kann eine höhere mechanische Festigkeit erzielt werden.

Gemäß einer bevorzugten Ausführungsform der vorliegenden Erfindung wird vorgeschlagen, dass das Steckerelement ein erstes Spulenelement mit einem ersten Teil eines Ferritkernübertragers und das Buchsenelement ein zweites Spulenelement mit einem zweiten Teil des Ferritkernübertragers aufweist. Die über den Steckverbinder zu übertragenden Messsignale oder Energieversorgungssignale werden mit bestimmten Frequenzen übertragen. Das Messsignal eines pH-Sensors kann zunächst verstärkt und dann in ein frequenzanaloges Signal gewandelt werden. Das Messsignal wird dann mit einer bestimmten Frequenz induktiv zu der Übertragungsleitung und weiter zu dem Messumformer übertragen. Das Energieversorgungssignal kann ebenfalls mit einer bestimmten Frequenz über den Steckverbinder übertragen und zur Energieversorgung der Mittel zur Realisierung der induktiven Signalübertragung und des pH-Sensors herangezogen werden. Das Kernmaterial und die Bauformen des Übertragers beeinflussen die Übertragungsleistung des Steckverbinders. Die Auswahl eines geeigneten Kernmaterials und einer geeigneten Bauform des Übertragers kann sensor- und anwendungsspezifisch und unter Kostengesichtspunkten getroffen werden.

Vorteilhafterweise ist in dem Steckerelement und in dem Buchsenelement jeweils mindestens ein Filter zur Trennung eines Messsignals von einem pH-Sensor und eines Energieversorgungssignals für den pH-Sensor vorgesehen.

Gemäß einer bevorzugten Ausführungsform der vorliegenden Erfindung wird vorgeschlagen, dass das dem oder jedem Sensor zugeordnete Steckerelement oder Buchsenelement einen Operationsverstärker aufweist. Der Operationsverstärker verstärkt das Messsignal des pH-Sensors bevor es über mittels der kontaktlosen Signalübertragung über den Steckverbinder übertragen wird.

Gemäß einer weiteren bevorzugten Ausführungsform der vorliegenden Erfindung wird vorgeschlagen, dass das dem oder jedem Sensor zugeordnete Steckerelement oder Buchsenelement einen spannungsgesteuerten Oszillator (VCO) zum Umwandeln eines Messsignals eines pH-Sensors in ein frequenzanaloges Signal aufweist. Durch den spannungsgesteuerten Oszillator wird das Messsignal eines Sensors vor der kontaktlosen Signalübertragung in ein frequenzanaloges Signal gewandelt. Es wird also kein Spannungs-Messsignal, sondern das frequenzanaloge Signal übertragen, der wesentlich störunempfindlicher als das Spannungs-Messsignal ist.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Es zeigen:

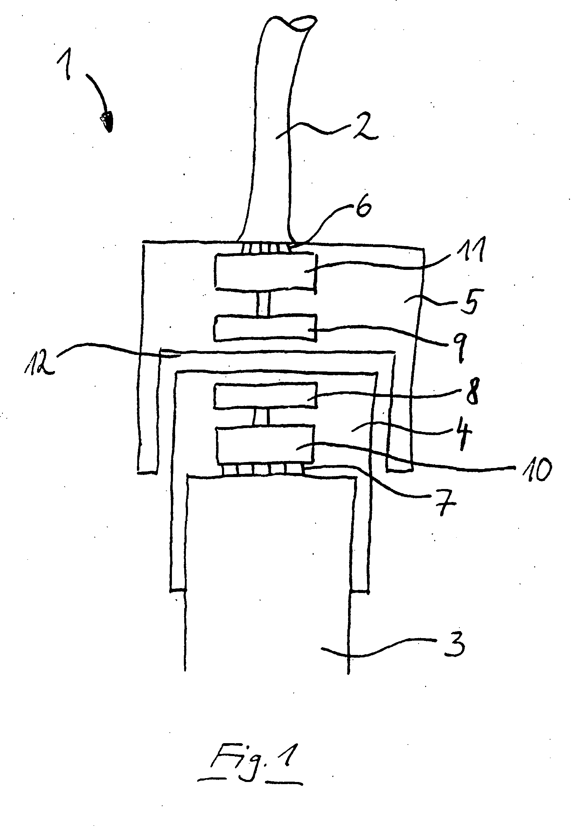

- Figur 1: einen erfindungsgemäßen Steckverbinder gemäß einer bevorzugten Ausführungsform im Schnitt.

In Figur 1 ist ein erfindungsgemäßer Steckverbinder in seiner Gesamtheit mit dem Bezugszeichen 1 bezeichnet. Der Steckverbinder 1 wird zum Anschluss einer Übertragungsleitung 2 an einen pH-Sensor 3 eingesetzt. Statt - wie in Figur 1 dargestellt - zum Anschluss von nur einem Sensor 3, kann der Steckverbinder 1 auch zum Anschluss mehrerer Sensoren verwendet werden, die zu einer gemeinsamen Messeinrichtung zusammengefasst sein können.

Der Steckverbinder 1 umfasst ein Steckerelement 4 und ein mit dem Steckerelement 4 lösbar verbundenes Buchsenelement 5. Die Übertragungsleitung 2 ist an das Buchsenelement 5 mittels einer elektrischen Kontaktierung 6 angeschlossen. Der Anschluss ist durch geeignete Mittel abgedichtet, um ein Eindringen von Feuchtigkeit, Staub oder Schmutzpartikeln und aggressiver oder ätzender Substanzen in den Bereich der elektrischen Kontaktierung 6 zu verhindern. Die Übertragungsleitung 2 ist bspw. durch einen spritzgießtechnischen Vergussvorgang an dem Buchsenelement 5 befestigt. Das Steckerelement 4 ist mittels einer elektrischen Kontaktierung 7 an den pH-Sensor 3 angeschlossen. Es ist eine geeignete Abdichtung im Bereich des Anschlusses vorgesehen, um das Eindringen von Feuchtigkeit, Staub oder Schmutzpartikeln und ätzender Substanzen in den Bereich der elektrischen Kontaktierung 7 zu verhindern. Das Steckerelement 4 ist bspw. durch einen spritzgießtechnischen Vergussvorgang an dem pH-Sensor 3 befestigt.

Ein entscheidender Unterschied des erfindungsgemäßen Steckverbinders 1 gegenüber den aus dem Stand der Technik bekannten Steckverbindern ist die kontaktlose Signalübertragung zwischen dem Steckerelement 4 und dem Buchsenelement 5. In dem Ausführungsbeispiel aus Figur 1 erfolgt die Signalübertragung auf induktivem Wege. Dazu umfasst das Steckerelement 4 ein erstes Spulenelement 8 mit einem ersten Teil eines Ferritkernübertragers. Das Buchsenelement 5 weist ein zweites Spulenelement 9 mit einem zweiten Teil des Ferritkernübertragers auf. Das erste Spulenelement 8 kann auch als die Primärseite eines Transformators und das zweite Spulenelement 9 als die Sekundärseite des Transformators betrachtet werden.

Über den Steckverbinder 1 können ein Energieversorgungssignal von einer Energiequelle zur Versorgung des pH-Sensors 3 mit elektrischer Energie, aber auch Messsignale von dem pH-Sensor 3 zu einem Messumformer übertragen werden. Die Energiequelle und der Messumformer sind mittels der Übertragungsleitung 2 an das Buchsenelement 5 angeschlossen, in Figur 1 jedoch nicht dargestellt. Zur Übertragung des Energieversorgungssignals wird das zweite Spulenelement 9 mit einer bestimmten Frequenz gespeist. Das Energieversorgungssignal wird mit dieser Frequenz an das erste Spulenelement 8 übertragen und dann gleichgerichtet. Zum Gleichrichten ist in dem Steckerelement 4 eine geeignete Elektronik 10 vorgesehen. Das gleichgerichtete Energieversorgungssignal dient als Versorgungsspannung für die steckerinterne Elektronik 10 und den pH-Sensor 3.

Die steckerinterne Elektronik 10 umfasst außerdem einen Operationsverstärker (nicht dargestellt), der ein Messsignal des pH-Sensors 3 verstärkt. Der Operationsverstärker kann als Impedanzwandler mit einem Verstärkungsfaktor v = 1 ausgebildet sein. Des Weiteren umfasst die steckerinterne Elektronik 10 einen spannungsgesteuerten Osziallator (VCO oder V/F-Converter), durch den das Spannungs-Messsignal in ein frequenzanaloges Signal gewandelt wird. Die Frequenz dieses frequenzanalogen Signals ist abhängig von dem Spannungswert des Messsignals. Das frequenzanaloge Signal wird über dieselben Spulenelemente 8, 9 übertragen, die auch zur Übertragung des Energieversorgungssignals dienen. Zur Trennung des Messsignals von dem Energieversorgungssignal sind in der steckerinternen Elektronik 10 und in einer buchseninternen Elektronik 11 primär- und sekundärseitige Filter (nicht dargestellt) vorgesehen.

Bei miteinander verbundenem Steckerelement 4 und Buchsenelement 5 ist zwischen dem Steckerelement 4 und dem Buchsenelement 5 ein schmaler Spalt 12 vorhanden. Bei dem erfindungsgemäßen Steckverbinder 1 müssen keine besondere Vorkehrungen getroffen werden, um den Spalt 12 abzudichten und das Eindringen von Feuchtigkeit, Staub oder Schmutzpartikeln und ätzender Substanzen zu verhindern. Anders als bei den aus dem Stand der Technik bekannten Steckverbindern, bei denen sich im Bereich des Spaltes elektrische Kontaktierungselemente befinden, die durch eindringene Substanzen kurzgeschlossen oder korrodiert werden können, haben die eindringenden Substanzen bei dem erfindungsgemäßen Steckverbinder 1 keine Beeinträchtigung des Signalübertragungsverhaltens zwischen dem Steckerelement 4 und dem Buchsenelement 5 zur Folge. Außerdem werden durch den erfindungsgemäßen Steckverbinder 1 Leckströme zwischen dem pH-Sensor 3 und dem Messumformer durch eine galvanische Trennung vermieden.

## Patentansprüche

1. Anordnung, umfassend einen pH-Sensor (3) und einen Steckverbinder (1), wobei mittels des Steckverbinders (1) eine Übertragunsleitung (2) an den pH-Sensor (3) anschließbar ist, wobei
über den Steckverbinder (1) ein Energieversorgungssignal an den pH-Sensor (3) und ein Messsignal von dem pH-Sensor (3) kontaktlos übertragbar sind,
der Steckverbinder (1) ein Steckerelement (4) und ein mit dem Steckerelement (4) lösbar verbindbares Buchsenelement (5), zum Anschluss der Übertragungsleitung (2) an den pH-Sensor (3) aufweist,
wobei entweder das Steckerelement (4) dem pH-Sensor (3) und das Buchsenelement (5) der Übertragungsleitung (2) zugeordnet ist, oder das Buchsenelement (5) dem pH-Sensor (3) und das Steckerelement (4) der Übertragungsleitung (2) zugeordnet ist,
keine elektrischen Kontaktelemente aus dem Buchsenelement (5) und dem Steckerelement (4) herausgeführt sind, das Buchsenelement (5) nach außen hin vollständig abgedichtet ist, das Steckerelement (4) nach außen hin vollständig abgedichtet ist, und
der Steckverbinder (1) Mittel (8, 9, 10, 11) zur induktiven Signalübertragung zwischen dem Steckerelement (4) und dem Buchsenelement (5) aufweist.

2. pH-Sensor nach Anspruch 1, wobei in dem Steckerelement (4) und in dem Buchsenelement (5) jeweils mindestens ein Filter zur Trennung eines Messsignals von dem pH-Sensor (3) und eines Energieversorgungssignals für den pH-Sensor (3) vorgesehen ist,

3. pH-Sensor nach Anspruch 1 oder 2, wobei das Steckerelement (4) und das Buchsenelement (5) Mittel zur Realisierung einer digitalen Signalübertragung zwischen dem Steckerelement (4) und dem Buchsenelement (5) aufweisen.

4. pH-Sensor nach einem der Ansprüche 1 bis 3, wobei das Steckerelement (4) ein erstes Spulenelement (8) mit einem ersten Teil eines Ferritkernübertragers und das Buchsenelement (5) ein zweites Spulenelement (9) mit einem zweiten Teil des Ferritkernübertragers aufweist.

5. pH-Sensor nach einem der Ansprüche 1 bis 4, wobei das dem pH-Sensor (3) zugeordnete Steckerelement (4) oder Buchsenelement (5) einen Operationsverstärker aufweist, welcher ein Messsignal des pH-Sensors (3) verstärkt.

## Claims

1. Arrangement, comprising a pH sensor (3) and a plug-in connector (1), where a transmission cable (2) can be connected to the pH sensor (3) by means of the plug-in connector (1), whereby:
a power supply signal can be transmitted to the pH sensor (3), and a measuring signal can be transmitted from the pH sensor (3) via the plug-in connector (1) in such a way that non-contact transmission takes place
the plug-in connector (1) exhibits a connector element (4) and a socket element (5), which can be non-permanently connected to the connector element (4), for connecting the transmission cable (2) to the pH sensor (3),
whereby either the connector element (4) is assigned to the pH sensor (3) and the socket element (5) is assigned to the transmission cable (2), or the socket element (5) is assigned to the pH sensor (3) and the connector element (4) is assigned to the transmission cable (2)
no electrical contact elements lead out of the socket element (5) and the connector element (4), the socket element (5) is fully sealed to the outside, the connector element (4) is fully sealed to the outside and
the plug-in connector (1) exhibits units (8, 9, 10, 11) for inductive signal transmission between the connector element (4) and the socket element (5).

2. pH sensor as per Claim 1, where at least one filter for separating a measuring signal from the pH sensor (3) and a power supply signal for the pH sensor (3) is provided in both the connector element (4) and the socket element (5).

3. pH sensor as per Claim 1 or 2, where the connector element (4) and socket element (5) exhibit units for implementing digital signal transmission between the connector element (4) and the socket element (5).

4. pH sensor as per one of the Claims 1 to 3, where the connector element (4) exhibits an initial coil element (8) with an initial part of a magnetic core transmitter and the socket element (5) exhibits a second coil element (9) with a second part of the magnetic core transmitter.

5. pH sensor as per one of the Claims 1 to 4, where the connector element (4) or socket element (5) assigned to the pH sensor (3) exhibits an operational amplifier which amplifies a measuring signal of the pH sensor (3).

## Revendications

1. Dispositif comprenant un capteur pH (3) et un connecteur (1), un câble de transmission (2) pouvant être branché au capteur pH (3) au moyen du connecteur (1), pour lequel
un signal d'alimentation en énergie peut être transmis au capteur pH (3) et un signal de mesure reçu en provenance du capteur pH, sans contact, par l'intermédiaire du connecteur (1),
le connecteur (1) comporte un élément de connexion mâle (4) et un élément de connexion femelle (5) connectable de façon amovible à l'élément de connexion mâle (4), destiné au raccordement du câble de transmission (2) au capteur pH (3),
l'élément de connexion mâle (4) étant attribué au capteur pH (3) et l'élément de connexion femelle (5) au câble de transmission (2), ou l'élément de connexion femelle (5) étant attribué au capteur pH (3) et l'élément de connexion mâle (4) au câble de transmission (2),
aucun élément de contact électrique n'étant sorti de l'élément de connexion femelle (5) et de l'élément de connexion mâle (4), l'élément de connexion femelle (5) étant entièrement étanche par rapport à l'extérieur, l'élément de connexion mâle (4) étant entièrement étanche par rapport à l'extérieur, et
le connecteur (1) comportant des moyens (8, 9, 10, 11) destinés à la transmission inductive des signaux entre l'élément de connexion mâle (4) et l'élément de connexion femelle (5).

2. Capteur pH selon la revendication 1, pour lequel est prévu dans l'élément de connexion mâle (4) un filtre destiné à la séparation d'un signal de mesure du capteur pH (3) et un signal d'alimentation en énergie pour le capteur pH (3).

3. Capteur pH selon la revendication 1 ou 2, pour lequel l'élément de connexion mâle (4) et l'élément de connexion femelle (5) comportent des moyens destinés à la réalisation d'une transmission de signal numérique entre l'élément de connexion mâle (4) et l'élément de connexion femelle (5).

4. Capteur pH selon l'une des revendications 1 à 3, pour lequel l'élément de connexion mâle (4) présente un premier élément de bobine (8) avec une première partie d'un transformateur à tore de ferrite et l'élément de connexion femelle (5) présente un deuxième élément de bobine (9) avec une deuxième partie d'un transformateur à tore de ferrite.

5. Capteur pH selon l'une des revendications 1 à 4, pour lequel l'élément de connexion mâle (4) ou l'élément de connexion femelle (5) attribué au capteur pH (3) présente un amplificateur opérationnel, qui amplifie un signal de mesure du capteur pH (3).
